# EUROPEAN PATENT SPECIFICATION

(11) **EP 3 731 049 B1**
(45) Date of publication and mention of the grant of the patent: **16.04.2025**
(21) Application number: 19170849.4
(22) Date of filing: 24.04.2019
(51) Int. Cl.: G05B 23/02

(54) **SUBSTATION EQUIPMENT MONITORING USING A SCADA SYSTEM**
UNTERSTATIONSAUSRÜSTUNGSÜBERWACHUNG UNTER VERWENDUNG EINES SCADA-SYSTEMS
SURVEILLANCE D'ÉQUIPEMENT DE SOUS-STATION À L'AIDE D'UN SYSTÈME SCADA

(43) Date of publication of application: 28.10.2020
(60) Divisional application: 25163113.1
(73) Proprietor: Hitachi Energy Ltd, 8050 Zürich (CH)
(72) Inventor: ABEYWICKRAMA, Nilanga, 723 51 Västerås (SE); BENGTSSON, Tord, 723 49 Västerås (SE); SAHOO, Subrat, 722 19 Västerås (SE); BROKVIST, Anders, 65101 Vaasa (FI); VIITALA, Marko, 65320 Vaasa (FI); SAERS, Robert, 722 46 Västerås (SE)
(74) Representative: AWA Sweden AB

(56) References cited:
- EP-A1- 3 023 851
- EP-A2- 2 363 773

## Description

### TECHNICAL FIELD

Embodiments presented herein relate to a method, a Supervisory Control And Data Acquisition (SCADA) system, a computer program, and a computer program product for monitoring substation equipment.

### BACKGROUND

Substation equipment, such as transformers, circuit breakers, etc. are traditionally monitored by dedicated hardware, software and own interface to provide results, warnings and alarms to the user. The general understanding is that data processing and analysis should be performed locally in the monitoring hardware and the results should be available on the local Human-Machine Interface (HMI) or remotely through web interfaces. This leads the substation owners, operators, or asset health responsible with no choice but to integrate all monitoring results to one common interface or to work with many different interfaces, which in practice result in either inefficient or even no use of such monitoring equipment.

As there could be numerous such monitoring devices for each piece of primary equipment in a substation, keeping track of health status of substation equipment becomes a challenge with many different local HMIs and web interfaces. It could also be challenging to handle cyber security issues when integrating different local HMIs and web interfaces. Substation SCADA systems are currently used either to just tunnel data to other analysis platforms or present status from monitoring equipment.

Hence there is still a need for improved substation monitoring.

EP 3 023 851 A1 discloses a system including a power transformer diagnosis and prognosis device having memory circuitry storing a plurality of models, wherein each of the plurality of models comprises correlations between potential combinations of operational and non-operational power transformer data and potential conditions of one or more subsystems of a power transformer and include a physics-based model and an empirical model. EP 3 023 851 A1 discloses that the system includes communication circuitry configured to receive a particular combination of operational and non-operational power transformer data related the power transformer. EP 3 023 851 A1 further discloses that the system includes processing circuitry configured to provide the particular combination of operational and non-operational power transformer data as inputs to the plurality of models, determine a diagnosis for the power transformer from outputs of the plurality of models, determine a prognosis for the power transformer from the outputs of the plurality of models, and display the diagnosis and the prognosis for the power transformer on a display device.

### SUMMARY

The present invention is defined by the independent claims. Embodiments are defined by the dependent claims.

An object of embodiments herein is to provide efficient monitoring of substation equipment.

According to a first aspect there is presented a method for monitoring substation equipment as defined in claim 1.

According to a second aspect there is presented a SCADA system for monitoring substation equipment as defined in claim 10.

According to a third aspect there is presented a computer program for monitoring substation equipment, the computer program comprising computer program code which, when run on a SCADA system, causes the SCADA system to perform a method according to the first aspect.

According to a fourth aspect there is presented a computer program product comprising a computer program according to the third aspect and a computer readable storage medium on which the computer program is stored. The computer readable storage medium could be a non-transitory computer readable storage medium.

Advantageously this provides efficient monitoring of the substation equipment.

Advantageously this enables a standardized monitoring of substation equipment using a SCADA system.

Advantageously this enables increased reliability due to conceivably less sensor and monitoring equipment requirements.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram of a monitoring system according to an embodiment;
Fig. 2 is a flowchart of methods according to embodiments;
Figs. 3 and 4 schematically illustrate screen captures according to an embodiment;
Fig. 5 is a schematic diagram showing functional units of a SCADA system according to an embodiment; and
Fig. 6 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any action or feature illustrated by dashed lines should be regarded as optional.

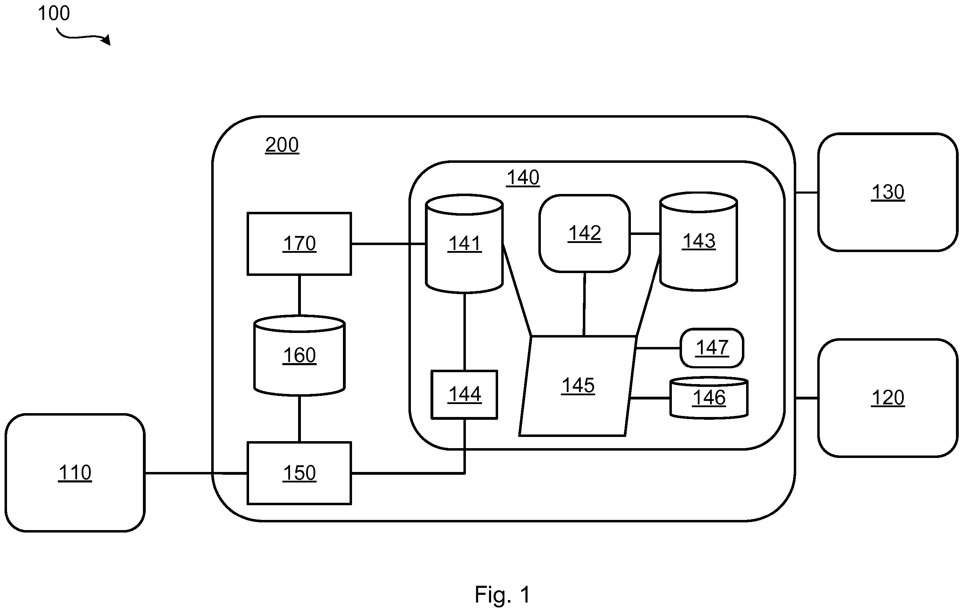

**Fig. 1** is a schematic diagram illustrating a monitoring system 100 where
embodiments presented herein can be applied. The monitoring system 100 comprises a SCADA system 200. In turn, the SCADA system comprises a SCADA software entity 140, a communication driver 150, a local storage 160, and a pre-processing block 170. In turn, the SCADA software entity 140 comprises process object storage 141, an HMI 142, data object storage 143, a data acquisition (DA) client 144, a data analysis block 145, a log 146, and an event generator 147. The SCADA system 200 is operatively connected to a piece of substation equipment 110, a historian 120, and a fleet management entity 130. As the skilled person understands, there might be a plurality of pieces of substation equipment 110 in the monitoring system 100 to which the SCADA system 200 is operatively connected.

Processed or raw monitoring signals/data values (e.g. representing values of signals and/or data from sensors, monitoring IEDs, protection IEDs, etc.) of one or more pieces of substation equipment 110 (hereinafter for brevity referred to as "substation equipment 110") are provided to the SCADA system 200 based on standard substation communication protocols like IEC 61850-8-1, Modbus, the Distributed Network Protocol (DNP), etc. The signal/data values might be received at the communication driver 150, such as an OPC (OLE for Process Control, where OLE is short for Object Linking and Embedding) server in the SCADA system 200. OPC is a software interface standard that allows Windows programs to communicate with industrial hardware devices. OPC is implemented in server/client pairs. The communication driver 150might be provided as a software program that converts the hardware communication protocol used by a programmable logic controller (PLC) into the OPC protocol, or the like. The communication driver 150 provides the data/signals to the local storage 160 and the OPC DA client 144.

As disclosed above, there is a need for improved substation monitoring. In more detail, even if substation SCADA systems 200 have the potential to host monitoring algorithms of different kind (performing pre-processing, processing and data analysis) and to aggregate all monitored information to provide a common interface to the user/operator alongside control and protection information, they are currently used either to just tunnel data to other analysis platforms or present status from monitoring equipment.

The embodiments disclosed herein therefore relate to mechanisms for monitoring substation equipment 110. In order to obtain such mechanisms there is provided a SCADA system 200, a method performed by the SCADA system 200, a computer program product comprising code, for example in the form of a computer program, that when run on a SCADA system 200, causes the SCADA system 200 to perform the method.

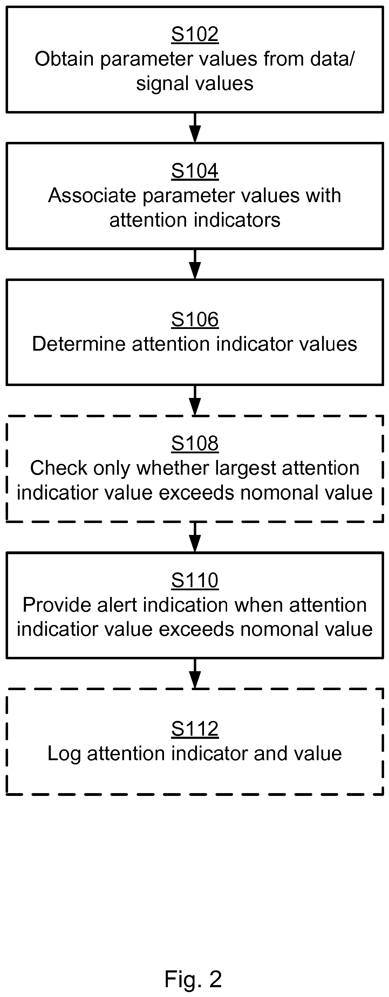

**Fig. 2** is a flowchart illustrating embodiments of methods for monitoring substation equipment 110. The methods are performed by the SCADA system 200. The methods are advantageously provided as computer programs 620.

S102: The SCADA system 200 obtains parameter values from data/signal values pertaining to parameters monitored in the substation equipment 110. How the SCADA system 200 might obtain signals/data values from the substation equipment 110 has been disclosed above.

Each parameter value could be directly obtained from one or more data/signal values but also be the result of a combination of one or more pre-processed data/signal values. Further, each data/signal value could be mapped to one or more parameter values.

S104: The SCADA system 200 associates each of at least some of the parameter values with at least one attention indicator. S104 might be implemented by the data analysis block 145.

S106: The SCADA system 200 determines one attention indicator value for each of the attention indicators by processing those parameter values that are associated with the respective attention indicators. S106 might be implemented by the data analysis block 145.

All attention indicators for all monitored parameter have one and the same nominal attention indicator value acting as a threshold for abnormal behavior of the substation equipment 110.

S110: The SCADA system 200 provides an alert indication to the HMI 142 when at least one of the attention indicator values is above the nominal attention indicator value. S110 might be implemented by the data analysis block 145 in conjunction with the HMI 142.

As a non-limiting illustrative example, assume that the parameter to be monitored is the total power loss in a transformer application, and that 12 waveforms (6 voltage waveforms and 6 corresponding current waveforms) are measured. From each of these waveforms, the fundamental frequency phasor (amplitude and phase angle, given as a complex number) is extracted during pre-processing and sent to the SCADA system 200. Thus, in total 24 data/signal values (one amplitude value and one phase angle value for each of the 12 waveforms) are provided and obtained by the SCADA system 200. In the SCADA system 200 the total power loss is then obtained by multiplying each voltage phasor with the complex conjugate of the corresponding current phasor, obtaining the phase power, then summing the phase powers on the high voltage side to obtain the total power of the transformer and the same for the low voltage side, and then taking the difference between the total power in and out of the transformer to obtain the total power loss. This difference is then the basis for one attention indicator. Thus, the phasors, or the waveforms they represent, are the data/signal values; the total power loss is one example of a parameter. The same 12 complex phasors can be used various combinations to determine also other parameter values and attention indicators.

Embodiments relating to further details of monitoring substation equipment 110 as performed by the SCADA system 200 will now be disclosed.

In some aspects, parts of the herein disclosed embodiments are implemented in the SCADA software entity 140 of the SCADA system 200 to provide a standardized solution for uniform substation equipment monitoring, by using programming capabilities provided for in the SCADA software entity 140 for pre-processing, processing and analysis of monitored parameters. Furthermore, detailed and fast health status presentation (so-called dialogs) to the user can be built using the visual programming environment of the SCADA software entity 140.

As disclosed above, the substation equipment 110 might comprise sensors, monitoring IEDs, and/or protection IEDs. The data/signal values might then be obtained from the sensors, monitoring IEDs, and/or protection IEDs.

In some examples there are at least as many attention indicators as there are monitored parameters (in practice there could be more attention indicators than monitored parameters). That is, if there are 20 parameters in the subsystem equipment that are monitored, then there are 20 attention indicators or more. However, this does not necessarily mean that 20 data/signal values are obtained per time unit (which in turn are mapped to at least 20 attention indicator values); the data/signal values could be obtained with different relative frequencies (such as depending on individual sampling periods in the substation equipment 110, the protocol according to which the data/signal values are obtained by the SCADA system 200 from the substation equipment 110, etc.). Further, some data/signal values, such as values from tap operations, are only available at irregular time intervals.

In some examples the data/signal values are pre-processed in the SCADA system 200, such as in the pre-processing block 170 that fetches the data/signal values from the local storage 160, before being associated with the parameter values. In more detail, according to the type of the signal/data, the signal/data values may be directly linked to the analysis routines in SCADA software (via the DA client 144) or passed through a pre-processing stage to extract relevant parameter values. Examples of pre-processing means are waveform analysis algorithms that extract parameter values from waveforms such as amplitudes, operation times and more. Processor and memory intensive complex pre-processing algorithms can be hosted in hardware of the SCADA system 200 and the rest of analysis routines can be coded and hosted within the software environment of the SCADA system 200.

According to the invention the data/signal values are pre-processed by being scaled such that a nominal value of each parameter value is associated with the nominal attention indicator value.

The attention indicator values per monitored parameter might thus be scaled quantities based on the data/signal values. In some examples the data/signal values are scaled with a monitored parameter dependent scaling function.

As noted above, the nominal attention indicator value acts as a threshold for abnormal behavior of the substation equipment 110. Further, all attention indicators have one and the same nominal attention indicator value. In some examples the nominal attention indicator value is 1.0. Thus, an attention indicator value 1.0 means that the parameter values of that attention indicator is exactly on the allowed limit (regardless of the actual value of the parameter values). This makes it easy to condense all of the individual attention indicator values into one single main individual attention indicator value by taking the largest value in any of them. In some examples it is thus enough just to check the attention indicator having the largest value. That is, according to an embodiment the SCADA system 200 is configured to perform S108:
S108: The SCADA system 200 checks only whether the largest of all the attention indicator values exceeds the nominal attention indicator value or not. S108 might be implemented by the data analysis block 145.

However, in some examples an alert indication is provided for each attention indicator whose value exceeds the nominal attention indicator value and then the values of all the attention indicators need to be checked.

In some examples the attention indicators (and their values) are linked to the event handing database of the SCADA system 200, which generates and logs events of the monitored parameters. That is, according to an embodiment the SCADA system 200 is configured to perform S112:
S112: The SCADA system 200 logs each at least one attention indicator (and its value) whose attention indicator value exceeds a particular value. This particular value might be equal to the nominal attention indicator value, or be an integer factor of the nominal attention indicator value. In some examples the logged attention indicator (and its value) is timestamped. The at least one attention indicator (and its value) might be logged in the log 146.

The monitored parameters and analysis results might thereby be available in a standard format if there is a need for communicating them to asset management or fleet assessment system, such as the historian 120 or the fleet management entity 130.

As an example, the alert indication is an alarm when at least one of the attention indicator values is at least three times the nominal attention indicator value. The alarm might be triggered as an event generated in the event block 147 in conjunction with the data analysis block 145.

As an illustrative non-limiting example, assume that three parameters of the substation equipment 110 are monitored; one parameter relating to temperature, one parameter relating to a first voltage, and one parameter relating to a second voltage. For simplicity, assume further that each parameter corresponds to one respective attention indicator (although in practice, it could typically be that one monitored parameter is associated with two or more attention indicators and that there are more attention indicators than monitored parameters). Assume further that the parameter relating to temperature has a nominal value of 20 degrees Celsius that corresponds to the nominal attention indicator value 1.0, that the parameter relating to the first voltage has a nominal value of 15 V that corresponds to the nominal attention indicator value 1.0, and that the parameter relating to the second voltage has a nominal value of 120 V that corresponds to the nominal attention indicator value 1.0. Then, a data/signal value of 15 degrees Celsius for the parameter relating to temperature would be mapped to an attention indicator value below 1.0, a data/signal value of 120 V for the parameter relating to the first voltage would be mapped to an attention indicator value above 1.0, and a data/signal value of 90 V for the parameter relating to the second voltage would be mapped to an attention indicator value below 1.0. Although there are three different parameters of different units and with different ranges, the user would still only need to consider if any of the attention indicators have a value below or above 1.0.

When needed, a detailed view of analyzed monitoring parameter values, warnings, alarms, etc. might be available to the user through a display at the HMI 142. This view could include history of input data to the analysis algorithms in the SCADA system 200, monitored parameters with their trends and set limits, results in different formats (like tables, pie charts, bar graphs, etc.).

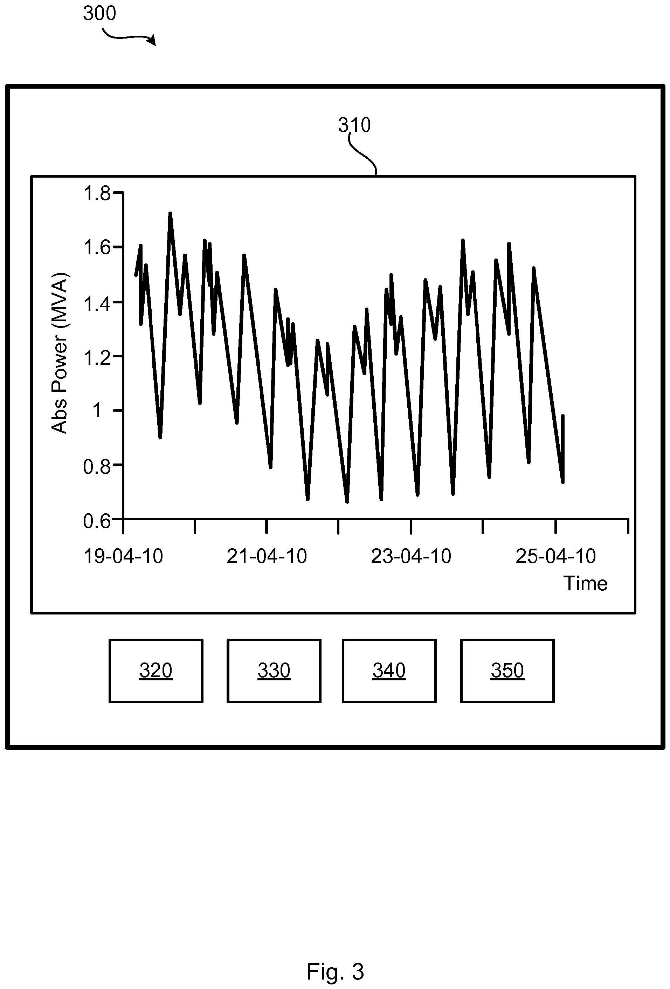

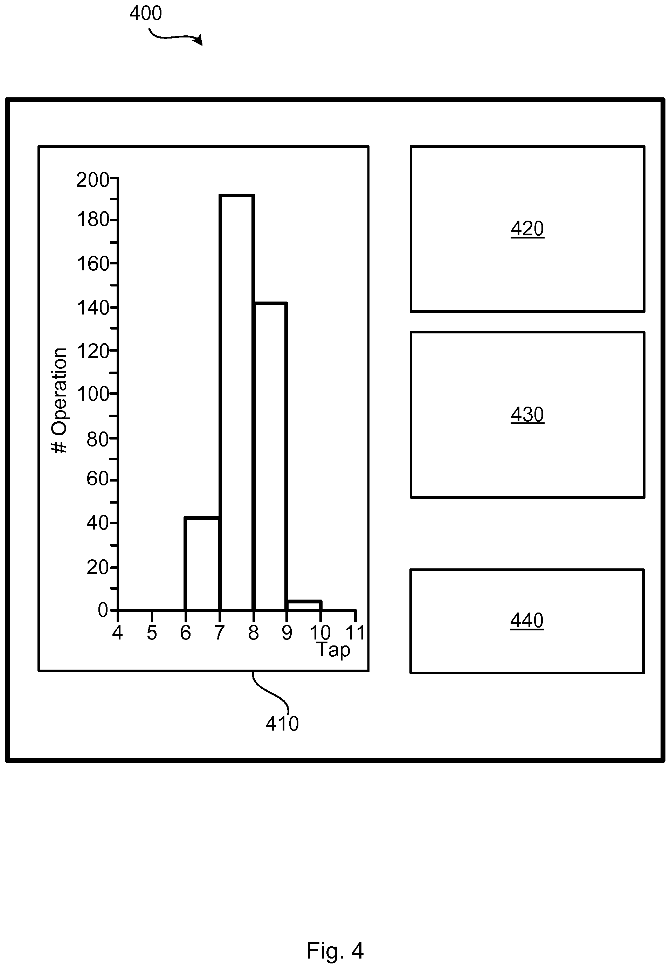

**Fig. 3** and **Fig. 4** show an example in the form of screen captures 300, 400 where a substation infrastructure is used to build a complete transformer monitoring system based on voltage and current signals available in protection IEDs. Fig. 3 schematically illustrates a display 310 and HMI components 320, 330, 340, 350 which could symbolize any combination of buttons, displays, menu items, lists, etc. Fig. 4 schematically illustrates a display 410 and HMI components 420, 430, 440 which could symbolize any combination of buttons, displays, menu items, lists, etc. Pre-processing, processing and analysis of data is performed in the SCADA system 200. In this particular case, transformer performance (impedance, turn ratio, magnetizing current and power loss) as in Fig. 3 and tap changer operation as in Fig. 4 are monitored based on phasor and waveform analysis performed in the pre-processing entity 170 and SCADA software entity 140.

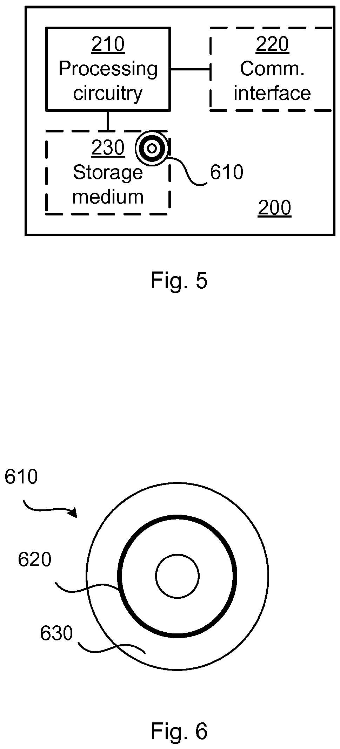

**Fig. 5** schematically illustrates, in terms of a number of functional units, the components of a SCADA system 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 610 (as in Fig. 6), e.g. in the form of a storage medium 230. The processing circuitry 210 may further be provided as at least one application specific integrated circuit (ASIC), or field programmable gate array (FPGA).

Particularly, the processing circuitry 210 is configured to cause the SCADA system 200 to perform a set of operations, or actions, as disclosed above. For example, the storage medium 230 may store the set of operations, and the processing circuitry 210 may be configured to retrieve the set of operations from the storage medium 230 to cause the SCADA system 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The SCADA system 200 may further comprise a communications interface 220 at least configured for communications with other entities, systems, functions, nodes, devices, and equipment. As such the communications interface 220 may comprise one or more transmitters and receivers, comprising analogue and digital components. The processing circuitry 210 controls the general operation of the SCADA system 200 e.g. by sending data and control signals to the communications interface 220 and the storage medium 230, by receiving data and reports from the communications interface 220, and by retrieving data and instructions from the storage medium 230. Other components, as well as the related functionality, of the SCADA system 200 are omitted in order not to obscure the concepts presented herein.

The processing circuitry 210, the storage medium 230, and the communications interface 220 collectively implements the functionality of the SCADA system 200 of Fig. 1.

**Fig. 6** shows one example of a computer program product 610 comprising computer readable storage medium 630. On this computer readable storage medium 630, a computer program 620 can be stored, which computer program 620 can cause the processing circuitry 210 and thereto operatively coupled entities and devices, such as the communications interface 220 and the storage medium 230, to execute methods according to embodiments described herein. The computer program 620 and/or computer program product 610 may thus provide means for performing any actions as herein disclosed.

In the example of Fig. 6, the computer program product 610 is illustrated as an optical disc, such as a CD (compact disc) or a DVD (digital versatile disc) or a Blu-Ray disc. The computer program product 610 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 620 is here schematically shown as a track on the depicted optical disk, the computer program 620 can be stored in any way which is suitable for the computer program product 610.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for monitoring substation equipment (110), the method being performed by a Supervisory Control And Data Acquisition, SCADA, system (200), the method comprising:
obtaining (S102) parameter values from data/signal values pertaining to parameters monitored in the substation equipment (110);
associating (S104) each parameter corresponding to at least some of the parameter values with at least one attention indicator, the at least one attention indicator corresponding to or being based on the parameter;
determining (S106) one attention indicator value for each of the attention indicators by processing the values of the parameters that are associated with the respective attention indicators,
wherein all attention indicators for all monitored parameters have one and the same nominal attention indicator value acting as a threshold for abnormal behavior of the substation equipment (110), wherein the data/signal values are pre-processed by being scaled such that a nominal value of each parameter is associated with the nominal attention indicator value; and
providing (S110) an alert indication to a human machine interface, HMI, (142) when at least one of the attention indicator values is above the nominal attention indicator value.

2. The method according to claim 1, wherein there are at least as many attention indicators as there are monitored parameters.

3. The method according to claim 1 or 2, wherein the data/signal values are pre-processed in the SCADA system (200) before being associated with the attention indicator values.

4. The method according to claim 1, wherein the data/signal values are scaled with a monitored parameter dependent scaling function.

5. The method according to any of the preceding claims, further comprising: checking (S108) only whether the largest of all the attention indicator values exceeds the nominal attention indicator value or not.

6. The method according to any of the preceding claims, further comprising: logging (S112) each at least one attention indicator whose attention indicator value exceeds a particular value.

7. The method according to any of the preceding claims, wherein the alert indication is an alarm when at least one of the attention indicator values is at least three times the nominal attention indicator value.

8. The method according to any of the preceding claims, wherein the nominal attention indicator value is 1.0.

9. The method according to any of the preceding claims, wherein the substation equipment (110) comprises sensors, monitoring Intelligent Electronic Devices, IEDs, and/or protection IEDs, and the data/signal values are obtained from the sensors, monitoring IEDs, and/or protection IEDs.

10. A Supervisory Control And Data Acquisition, SCADA, system (200) for monitoring substation equipment (110), the SCADA system (200) comprising processing circuitry (210), the processing circuitry being configured to cause the SCADA system (200) to perform the method according to claim 1.

11. The SCADA system (200) according to claim 10, further being configured to perform the method according to any of claims 2 to 9.

12. A computer program (620) for monitoring substation equipment (110), the computer program comprising computer code which, when run on processing circuitry (210) of a Supervisory Control And Data Acquisition, SCADA, system (200), causes the SCADA system (200) to perform the method according to any one of claims 1-9.

13. A computer program product (610) comprising a computer program (620) according to claim 12, and a computer readable storage medium (630) on which the computer program is stored.

## Patentansprüche

1. Verfahren zur Überwachung von Unterstationsausrüstung (110), wobei das Verfahren durch ein System (200) zur Überwachungssteuerung und Datenerfassung, SCADA-System, durchgeführt wird, wobei das Verfahren Folgendes umfasst:
Gewinnen (S102) von Parameterwerten aus Daten- bzw. Signalwerten, die Parameter betreffen, die in der Unterstationsausrüstung (110) überwacht werden;
Zuordnen (S104) jedes Parameters entsprechend mindestens einiger der Parameterwerte zu mindestens einer Aufmerksamkeitsanzeige, wobei die mindestens eine Aufmerksamkeitsanzeige dem Parameter entspricht oder auf diesem basiert;
Bestimmen (S106) eines Aufmerksamkeitsanzeigewerts für jede der Aufmerksamkeitsanzeigen durch Verarbeiten der Werte der Parameter, die den jeweiligen Aufmerksamkeitsanzeigen zugeordnet sind,
wobei alle Aufmerksamkeitsanzeigen für alle überwachten Parameter ein und denselben Soll-Aufmerksamkeitsanzeigewert aufweisen, der als ein Schwellenwert für anomales Verhalten der Unterstationsausrüstung (110) dient, wobei die Daten- bzw. Signalwerte vorverarbeitet werden, indem sie derart skaliert werden, dass ein Sollwert jedes Parameters dem Soll-Aufmerksamkeitsanzeigewert zugeordnet wird; und
Bereitstellen (S110) einer Aufmerksamkeitsanzeige für eine Mensch-Maschine-Schnittstelle, HMI, (142), wenn mindestens einer der Aufmerksamkeitsanzeigewerte oberhalb des Soll-Aufmerksamkeitsanzeigewerts liegt.

2. Verfahren nach Anspruch 1, wobei es mindestens so viele Aufmerksamkeitsanzeigen gibt, wie es überwachte Parameter gibt.

3. Verfahren nach Anspruch 1 oder 2, wobei die Daten- bzw. Signalwerte in dem SCADA-System (200) vorverarbeitet werden, bevor sie den Aufmerksamkeitsanzeigewerten zugeordnet werden.

4. Verfahren nach Anspruch 1, wobei die Daten- bzw. Signalwerte mit einer von dem überwachten Parameter abhängigen Skalierungsfunktion skaliert werden.

5. Verfahren nach einem der vorhergehenden Ansprüche, das ferner Folgendes umfasst: Überprüfen (S108) nur, ob der größte von allen Aufmerksamkeitsanzeigewerten den Soll-Aufmerksamkeitsanzeigewert überschreitet oder nicht.

6. Verfahren nach einem der vorhergehenden Ansprüche, das ferner Folgendes umfasst: Aufzeichnen (S112) jeder der mindestens einen Aufmerksamkeitsanzeige, deren Aufmerksamkeitsanzeigewert einen bestimmten Wert überschreitet.

7. Verfahren nach einem der vorhergehenden Ansprüche, wobei die Warnsignalanzeige ein Alarm ist, wenn mindestens einer der Aufmerksamkeitsanzeigewerte mindestens dem Dreifachen des Soll-Aufmerksamkeitsanzeigewerts entspricht.

8. Verfahren nach einem der vorhergehenden Ansprüche, wobei der Soll-Aufmerksamkeitsanzeigewert 1,0 ist.

9. Verfahren nach einem der vorhergehenden Ansprüche, wobei die Unterstationsausrüstung (110) Sensoren, intelligente elektronische Vorrichtungen, IEDs, zur Überwachung und/oder Schutz-IEDs umfasst, und wobei die Daten- bzw. Signalwerte von den Sensoren, Überwachungs-IEDs und/oder Schutz-IEDs gewonnen werden.

10. System (200) zur Überwachungssteuerung und Datenerfassung, SCADA-System, zum Überwachen von Unterstationsausrüstung (110), wobei das SCADA-System (200) eine Verarbeitungsschaltungsanordnung (210) umfasst, wobei die Verarbeitungsschaltungsanordnung konfiguriert ist, das SCADA-System (200) zu veranlassen, das Verfahren nach Anspruch 1 auszuführen.

11. SCADA-System (200) nach Anspruch 10, das ferner konfiguriert ist, das Verfahren nach einem der Ansprüche 2 bis 9 auszuführen.

12. Computerprogramm (620) zur Überwachung von Unterstationsausrüstung (110), wobei das Computerprogramm Computercode enthält, der dann, wenn er auf einer Verarbeitungsschaltungsanordnung (210) eines Systems (200) zur Überwachungssteuerung und Datenerfassung, SCADA-System, ausgeführt wird, das SCADA-System (200) veranlasst, das Verfahren nach einem der Ansprüche 1-9 durchzuführen.

13. Computerprogrammprodukt (610), das ein Computerprogramm (620) nach Anspruch 12, und ein computerlesbares Speichermedium (630), auf dem das Computerprogramm gespeichert ist, enthält.

## Revendications

1. Procédé de surveillance d'un équipement de sous-station (110), le procédé étant exécuté par un système de contrôle de surveillance et d'acquisition de données, SCADA, (200), le procédé comprenant :
l'obtention (S102) de valeurs de paramètres à partir de valeurs de données/signal appartenant à des paramètres surveillés dans l'équipement de sous-station (110) ;
l'association (S104) de chaque paramètre correspondant à au moins certaines des valeurs de paramètres à au moins un indicateur d'attention, l'au moins un indicateur d'attention correspondant au paramètre ou étant basé sur celui-ci ;
la détermination (S106) d'une valeur d'indicateur d'attention pour chacun des indicateurs d'attention par traitement des valeurs des paramètres qui sont associés aux indicateurs d'attention respectifs,
tous les indicateurs d'attention pour tous les paramètres surveillés ayant une seule et même valeur d'indicateur d'attention nominale agissant en tant que seuil pour un comportement anormal de l'équipement de sous-station (110), les valeurs de données/signal étant pré-traitées en étant mises à l'échelle de telle sorte qu'une valeur nominale de chaque paramètre soit associée à la valeur d'indicateur d'attention nominale ; et
la fourniture (S110) d'une indication d'alerte à une interface homme-machine, IHM, (142) lorsqu'au moins l'une des valeurs d'indicateurs d'attention est supérieure à la valeur d'indicateur d'attention nominale.

2. Procédé selon la revendication 1, dans lequel il y a au moins autant d'indicateurs d'attention qu'il y a de paramètres surveillés.

3. Procédé selon la revendication 1 ou 2, dans lequel les valeurs de données/signal sont pré-traitées dans le système SCADA (200) avant d'être associées aux valeurs d'indicateurs d'attention.

4. Procédé selon la revendication 1, dans lequel les valeurs de données/signal sont mises à l'échelle à l'aide d'une fonction de mise à l'échelle dépendant du paramètre surveillé.

5. Procédé selon l'une quelconque des revendications précédentes, comprenant en outre : la vérification (S108) uniquement du fait que la plus grande de toutes les valeurs d'indicateurs d'attention dépasse ou non la valeur d'indicateur d'attention nominale.

6. Procédé selon l'une quelconque des revendications précédentes, comprenant en outre : la journalisation (S112) de chacun des au moins un indicateur d'attention dont la valeur d'indicateur d'attention excède une valeur particulière.

7. Procédé selon l'une quelconque des revendications précédentes, dans lequel l'indication d'alerte est une alarme lorsqu'au moins l'une des valeurs d'indicateur d'attention est égale à au moins trois fois la valeur d'indicateur d'attention nominale.

8. Procédé selon l'une quelconque des revendications précédentes, dans lequel la valeur d'indicateur d'attention nominale est de 1.0.

9. Procédé selon l'une quelconque des revendications précédentes, dans lequel l'équipement de sous-station (110) comprend des capteurs, des dispositifs électroniques intelligents, IED, de surveillance et/ou des IED de protection, et les valeurs de données/signal sont obtenues des capteurs, des IED de surveillance et/ou des IED de protection.

10. Système de contrôle de surveillance et d'acquisition de données, SCADA, (200) pour surveiller un équipement de sous-station (110), le système SCADA (200) comprenant des circuits de traitement (210), les circuits de traitement étant configurés pour amener le système SCADA (200) à exécuter le procédé selon la revendication 1.

11. Système SCADA (200) selon la revendication 10, configuré en outre pour exécuter le procédé selon l'une quelconque des revendications 2 à 9.

12. Programme informatique (620) pour la surveillance d'un équipement de sous-station (110), le programme informatique comprenant un code informatique qui, lorsqu'il est exécuté sur des circuits de traitement (210) d'un système de contrôle de surveillance et d'acquisition de données, SCADA, (200), amène le système SCADA (200) à exécuter le procédé selon l'une quelconque des revendications 1 à 9.

13. Produit de programme informatique (610) comprenant un programme informatique (620) selon la revendication 12, et un support de stockage lisible par ordinateur (630) sur lequel est stocké le programme informatique.
